# FASCICULE DE BREVET EUROPEEN

(11) **EP 4 347 205 B1**
(45) Date de publication et mention de la délivrance du brevet: **09.07.2025**
(21) Numéro de dépôt: 22734660.8
(22) Date de dépôt: 02.06.2022
(51) Int. Cl.: B28B 1/00, B28B 23/02, B29C 64/118, B29C 64/209, B29C 70/22, B33Y 30/00, B33Y 40/00, E04G 21/04, B28B 23/00, B33Y 10/00, B29C 70/38

(54) **SYSTÈME ET PROCÉDÉ DE FABRICATION D'UN MATÉRIAU DE CONSTRUCTION**
SYSTEM UND VERFAHREN ZUR HERSTELLUNG EINES BAUMATERIALS
SYSTEM AND METHOD FOR MANUFACTURING A BUILDING MATERIAL

(30) Priorité: 02.06.2021 FR 2105830
(43) Date de publication de la demande: 10.04.2024
(73) Titulaire: Universite De Bretagne Sud, 56100 Lorient (FR)
(72) Inventeur: JACQUET, Yohan, 56100 Lorient (FR)
(74) Mandataire: Icosa
(86) Numéro de dépôt international: PCT/FR2022/051039
(87) Numéro de publication internationale: WO 2022/254149

(56) Documents cités:
- DE-A1- 102017 221 661
- DE-A1- 102017 221 661
- RU-C1- 2 704 995
- RU-C1- 2 704 995
- US-A1- 2017 182 712
- US-A1- 2017 182 712
- US-B1- 10 562 226
- US-B1- 10 562 226

## Description

### DOMAINE DE L'INVENTION

La présente invention concerne un système et un procédé de fabrication d'un ouvrage imprimé.

Plus précisément, l'invention concerne un système et un procédé de fabrication d'un matériau de construction comprenant une matrice imprimée et une fibre de renfort.

### ÉTAT DE LA TECHNIQUE

On connaît des imprimantes 3D de construction permettant la construction de bâtiments ou de parties de bâtiments via le dépôt de matière en couches successives sur un plan de dépôt, à partir d'un modèle tridimensionnel de l'ouvrage.

L'ouvrage ainsi obtenu présente toutefois des faibles propriétés mécaniques. En effet, une rigidification, ou prise, progressive des couches est nécessaire afin de garantir la stabilité dimensionnelle de l'ouvrage. Cependant, le séchage plus rapide à l'inter-couche, et retardé au centre de la couche, rend les liaisons entre les couches mécaniquement faibles.

On connaît des solutions pour renforcer un matériau de construction imprimé, consistant à placer des éléments de renfort, comme par exemples des barres en acier, des clous, ou des vis, à l'inter-couche. Alternativement, le matériau de construction peut être imprimé autour d'un treillis. Cependant, ces solutions restent relativement limitées car elles ne sont pas compatibles avec toutes les formes et/ou les compositions du matériau imprimé. On observe également dans ces types de renforts des décohésions locales dues au manque d'adhérence entre l'élément de renfort et le matériau imprimé. En outre, elles sont complexes, non automatisables et couteuses.

Une solution pour contourner ces problèmes consiste à rajouter des fibres de renfort dans le matériau de construction imprimé. Par exemple, des morceaux de fibres peuvent être introduites directement dans le matériau de construction avant impression. Cette solution est toutefois non satisfaisante lorsqu'il s'agit d'améliorer l'adhésion entre les couches et rend difficile l'extrusion.

DE 10 2017 221661 A1 divulgue un système et procédé de fabrication d'un matériau de construction composite suivant le préambule des revendications respectives 1 et 6.

Un objectif de la présente invention est de fournir un système et un procédé de fabrication permettant de résoudre les inconvénients de l'art antérieur, et d'obtenir des matériaux de construction avec des performances mécaniques améliorées.

### RÉSUMÉ

L'invention concerne donc un système de fabrication d'un matériau de construction composite comprenant une matrice imprimée et une fibre continue noyée dans ladite matrice, le système comprenant une tête d'impression configurée pour déposer la matrice par dépôt de matière en couches successives sur un plan de dépôt, et un dispositif d'injection configuré pour introduire la fibre continue dans la matrice déposée par la tête d'impression.

Le dispositif d'injection comprend :
- une tête de distribution configurée pour délivrer la fibre, ladite tête de distribution étant mobile selon une direction verticale perpendiculaire au plan de dépôt, entre une position haute et une position basse ;
- un dispositif d'entrainement configuré pour faire osciller la tête de distribution entre la position haute et la position basse ; et
- un élément de rappel élastique configuré pour rappeler passivement la tête de distribution de la position basse à la position haute.

Avantageusement, le système permet d'introduire la fibre dans la matrice imprimée en cours de dépôt et de créer ainsi un motif continu dans ladite matrice. Le matériau de construction obtenu ne nécessite pas l'introduction successive d'éléments de renfort.

Dans la présente invention, par *"renfort"* on entend le matériau produit et introduit, grâce au dispositif d'injection, dans une matrice imprimée. Par *"matrice imprimée"* on entend un matériau imprimé avec une imprimante 3D. La matrice imprimée peut être un matériau composite, par exemple du béton, ou tout autre matériau à matrice colloïdale.

Plus précisément, le déplacement de la tête de distribution le long de la direction verticale permet d'introduire la fibre en suivant un motif à travers de multiples couches, ce qui permet d'augmenter l'adhérence entre les couches de matrice imprimées.

Avantageusement, le rappel passif de la tête de distribution de la position basse à la position haute permet de simplifier le fonctionnement du dispositif d'entrainement. En effet, dans cet exemple de réalisation le déplacement de la tête de distribution de sa position basse vers sa position haute peut être assuré par l'élément de rappel élastique, alors que le déplacement dans la direction inverse (de la position haute vers la position basse) peut être assuré par le dispositif d'entrainement.

En réduisant le couple fourni par le dispositif d'entrainement, il est possible d'utiliser un dispositif d'entrainement de dimensions plus compactes.

Dans un mode de réalisation, le dispositif d'injection comprend un premier dispositif d'alimentation configuré pour amener la fibre à la tête de distribution. Un guide continue tubulaire (tube PTFE par exemple) peut avantageusement être employé.

Le premier dispositif d'alimentation peut par exemple comprendre une bobine. Avantageusement, une bobine permet de stocker une fibre très longue et continue.

Dans un mode de réalisation, la tête de distribution comprend une aiguille creuse apte à être traversée par la fibre continue.

Une aiguille creuse permet de délivrer et guider une fibre semi-rigide ou souple aussi bien qu'un matériau fluide.

Dans un mode de réalisation, la tête de distribution est configurée pour délivrer un matériau d'interphase avec la fibre.

Cette configuration permet de délivrer un matériau d'interphase. Le matériau d'interphase peut être un matériau qui imprègne la fibre, ou un matériau qui enveloppe la fibre, ou encore qui est déposé conjointement avec la fibre dans la matrice imprimée. Avantageusement, le matériau d'interphase forme une interface entre la fibre et la matrice imprimée. Il permet donc, entre autres, d'améliorer l'adhérence entre la fibre et la matrice imprimée.

Dans un mode de réalisation, le dispositif d'injection comprend un deuxième dispositif d'alimentation configuré pour amener le matériau d'interphase à la tête de distribution.

Comme mentionné plus haut, dans un mode de réalisation, la tête de distribution comprend une aiguille creuse.

De manière avantageuse, l'aiguille a un diamètre compris entre 2 mm et 3 cm, et une longueur comprise entre 50 mm et 200 mm. Une aiguille de cette dimension peut facilement être introduite dans une matrice imprimée en cours de dépôt, et traverser au moins une couche déposée. En outre, elle permet d'obtenir, grâce à sa partie creuse, un débit suffisant de matériau d'interphase.

Dans un mode de réalisation, le système comprend une pompe à débit contrôlable pour délivrer le matériau d'interphase à la tête de distribution.

Avantageusement, la pompe permet de délivrer un matériau d'interphase liquide.

Dans un mode de réalisation, le dispositif d' entrainement est configuré pour faire osciller la tête de distribution entre la position haute et la position basse à une fréquence et une amplitude prédéterminées.

Cette configuration permet d'introduire périodiquement, à la fréquence prédéterminée, la tête de distribution dans la matrice imprimée. A chaque introduction, au moins une inter-couche est traversée par la tête de distribution. Le nombre d'inter-couches traversées dépend de l'amplitude de l'oscillation.

La fibre délivrée par la tête de distribution oscillante forme ainsi un motif périodique et continu dans la matrice imprimée. Le motif a une amplitude déterminée par l'amplitude de l'oscillation, et une périodicité déterminée par la fréquence d'oscillation.

L'invention concerne également un procédé de fabrication d'un matériau de construction composite comprenant une matrice imprimée et une fibre continue noyée dans ladite matrice, le procédé comprenant une étape de dépôt d'au moins deux couches de matrice imprimée, et une étape d'insertion de la fibre continue à l'intérieur des au moins deux couches.

Avantageusement, la fibre continue assure une continuité multidirectionnelle du renfort. En outre, le motif de la fibre continue traverse, en faisant des allers-retours, au moins deux inter-couches, ce qui permet d'améliorer l'adhérence entre les couches de matrice imprimée.

Da manière globale, le procédé permet d'obtenir un matériau composite ayant une résistance mécanique améliorée, grâce à la meilleure adhérence entre les couches déposées et à la continuité multidirectionnelle du renfort. En outre, le procédé est très rapide car la fibre de renfort est délivrée dans la matrice imprimée en cours d'impression. Aucune étape successive d'introduction d'un matériau de renfort n'est donc requise.

Dans un mode de réalisation, la matrice imprimée comprend du béton, de la mousse de béton, de la mousse isolante, un matériau argileux. Ces matériaux de construction sont compatibles avec une fabrication additive basée sur l'impression par extrusion/dépôt de matière en couches successives.

Dans un mode de réalisation, le procédé comprend en outre, pendant l'étape d'insertion, l'introduction d'un matériau d'interphase avec la fibre continue au travers des au moins deux couches.

Avantageusement, le matériau d'interphase permet d'améliorer l'adhérence entre la fibre et la matrice imprimée.

Dans un mode de réalisation, la matrice imprimée comprend du béton, de la mousse de béton, de la mousse isolante, un matériau argileux.

Par exemple, le matériau d'interphase peut être une matrice cimentaire, une matrice à base de terre, une matrice polymère. Ces matériaux sont caractérisés par une haute performance mécanique et une haute adhérence à la fibre.

Dans un mode de réalisation, la fibre est une fibre en acier, une fibre de carbone, une fibre végétale, ou une fibre synthétique, de préférence sous forme d'une tresse, d'un fil, ou d'un toron.

Avantageusement, une fibre sous forme de tresse (ou toron) poreuse permet d'améliorer l'adhésion avec la matrice et/ou le matériau d'interphase.

Dans un mode de réalisation, la distance entre la position haute et la position basse est ajustable entre 5 cm et 50 cm en accord avec les dimensions de la structure imprimée.

Dans un mode de réalisation, la vitesse de déplacement de la tête de distribution entre la position haute et la position basse (fréquence de l'oscillation) est ajustable afin de faire varier la périodicité du motif de la fibre. En variant la périodicité du motif de la fibre il est possible de faire varier la densité de renforts.

De préférence, la périodicité du motif de la fibre est comprise entre 5 cm et 20 cm.

D'après l'invention, le procédé utilise un système comme décrit ci-avant. Dans ce cas, l'étape de dépôt comprend le dépôt d'au moins deux couches de matrice imprimée par la tête d'impression, et l'étape d'insertion comprend les phases successives suivantes :
- une phase d'injection durant laquelle la tête de distribution est déplacée le long de la position verticale de sa position haute à sa position basse ;
- une phase de retour durant laquelle la tête de distribution est déplacée le long de la position verticale de sa position basse à sa position haute ;
- une phase neutre durant laquelle la tête de distribution est en position haute.

La fibre est délivrée via la tête de distribution durant ces trois phases, ce qui permet d'obtenir une fibre continue noyée dans la matrice imprimée.

Dans un mode de réalisation, un matériau d'interphase est introduit à travers des couches de matrice imprimées via la tête de distribution au moins durant la phase d'injection.

La délivrance du matériau d'interphase pourra être prolongée avec un débit moindre afin de favoriser l'adhésion entre couches. L'emploi de ce matériau d'interphase de cette façon peut, le cas échéant, contribuer à résoudre les problèmes de séchages évoqués plus haut.

### DESCRIPTION DÉTAILLÉE

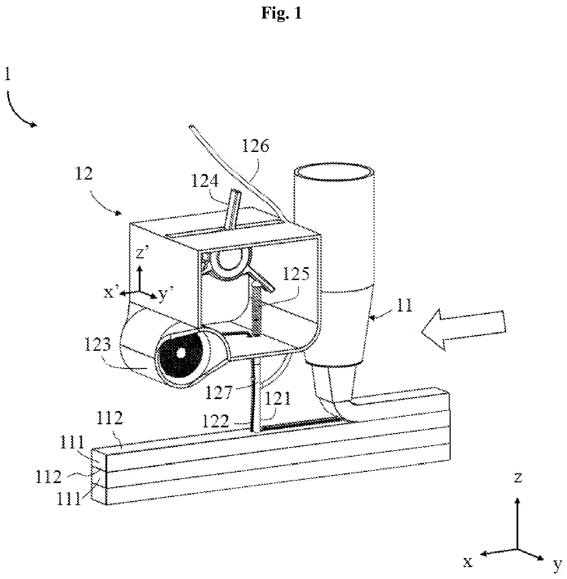

La figure 1 montre un système 1 comprenant une tête d'impression 11 pour dépôt de matière (la matrice imprimée) en couches 111 successives, et un dispositif d'injection 12 pour délivrer une fibre 122.

Le dispositif d'injection 12 comprend une partie fixe, solidaire à la tête d'impression 11 et une tête de distribution 121.

Par « tête de distribution » on entend la partie mobile du dispositif d'injection 12. La tête de distribution 121 est apte à recevoir un produit (une fibre, un fluide, etc...) stocké dans un dispositif d'alimentation 123 tel qu'un récipient, une bobine, un réservoir, et acheminer ce produit depuis son dispositif d'alimentation 123 jusqu'à la matrice imprimée.

Par exemple, la tête de distribution 121 peut comprendre un ou plusieurs canaux communiquant, d'une part, avec le dispositif d'alimentation 123 contenant le produit à distribuer et, d'autre part, avec l'extérieur. Dans ce cas, lors de son mouvement, la tête de distribution 121 peut prendre une position dans laquelle l'extrémité communiquant avec l'extérieur est en contact avec la matrice imprimée, ainsi permettant l'introduction du produit au sein de la matrice.

Le système 1 permet ainsi d'obtenir un matériau de construction composite comprenant une matrice imprimée, c'est-à-dire le matériau déposé par la tête d'impression 11, et une fibre 122 noyée dans cette matrice imprimée.

La tête d'impression 11 se déplace sur un plan horizontal xy (direction indiquée par la flèche blanche), également appelé « plan de dépôt ». Durant son déplacement, la tête d'impression 11 dépose sur le plan de dépôt xy les couches 111 de matrice imprimées.

Le dispositif d'injection 12 est solidaire à la tête d'impression 11. Son déplacement sur le plan de dépôt xy est donc synchronisé avec celui de la tête d'impression 11.

En conséquence, si la tête d'impression 11 est capable d'une rotation autour d'un axe verticale z, le dispositif d'injection 12 peut aussi suivre cette rotation.

Le dispositif d'injection 12 solidaire de la tête d'impression 11 permet d'utiliser une seule commande (par exemple un G-code) pour le dispositif d'injection 12 et pour la tête d'impression 11.

Par exemple, le dispositif d'injection 12 peut être accolé à la tête d'impression 11 ou fixé à la tête d'impression 11 via un collier de serrage ou tout autre mécanisme de fixation réversible. La fixation réversible sur la tête d'impression 11 permet de fournir un dispositif d'injection versatile qui peut être adapté à n'importe quelle tête d'impression.

Le dispositif d'injection 12 comprend une tête de distribution 121 qui est destinée à délivrer la fibre 122 au sein de la matrice imprimée par la tête d'impression 11. Par exemple, la fibre 122 peut être guidée le long de la tête de distribution 121 grâce à un guide 127. Un tube à base de PTFE peut avantageusement être utilisé pour guider la fibre le long du dispositif d'injection. Alternativement, la tête de distribution 121 peut présenter une lumière pour guider la fibre.

De manière avantageuse, le guide 127 peut être d'un matériau qui limite les frottements, par exemple en téflon. Le guide 127 peut être par exemple un anneau ou un tube.

De préférence, le guide 127 est une aiguille creuse. Une aiguille a une forme particulièrement adaptée pour piquer la matrice imprimée et en traverser les couches.

L'aiguille creuse permet une meilleure versatilité car elle permet de délivrer la fibre le long d'une surface extérieure de l'aiguille ou à l'intérieur de la partie creuse de l'aiguille. En outre, une aiguille creuse permet également d'injecter un matériau fluide au sein de la matrice imprimée.

Le déplacement de la tête de distribution 121 le long de la direction verticale z est assuré par un dispositif d'entrainement 124, qui fait osciller la tête de distribution 121 entre une position basse et une position haute.

Le dispositif d'injection 12 comprend également un élément de rappel élastique 125. Dans ce cas, le dispositif d'entrainement 124 peut assurer le déplacement de la tête de distribution 121 de la position haute à la position basse et l'élément de rappel élastique passif 125 peut rappeler la tête de distribution de la position basse à la position haute. L'utilisation d'un élément de rappel élastique 125 est avantageuse car elle permet d'augmenter la réactivité du système 1. En effet, augmenter la réactivité du système 1 permet de minimiser les dégâts dans la matrice imprimée dus à la pénétration du dispositif d'injection 12 avançant avec la tête d'impression 11 (plus la vitesse d'impression est élevée, plus l'oscillation du dispositif d'injection 12 doit être brève, sans quoi une part importante de la matrice imprimée serait endommagée). L'élément de rappel élastique 125 étant passif, il permet une réactivité instantanée contrairement au temps de réactivité d'un actionneur actif (tel qu'un moteur). En effet, l'élément de rappel 125 déplace la tête de distribution de la position basse à la position haute instantanément dès que la force appliquée sur l'élément de rappel élastique 125 s'annule. Cet élément de rappel élastique de rappel permet donc de s'affranchir des exigences en termes de réactivité d'un éventuel moteur et du coût associé : un tel moteur ferait tourner un culbuteur à une vitesse connue et donc une période de temps connue, et le retour aurait lieu lorsque la tête de l'aiguille oscillante n'est pas en contact avec un culbuteur.

Dans l'exemple de réalisation illustré en figure 1, l'élément de rappel élastique passif 125 est un ressort hélicoïdal enroulé autour d'une extrémité haute de la tête de distribution 121. Ce ressort est en appui sur le corps du dispositif d'injection 12, ce qui le contraint lors du déplacement de la tête de distribution 121 de sa position haute vers sa position basse. L'étirement du ressort entraine la translation de la tête de distribution dans la direction inverse, c'est-à-dire de sa position basse, vers sa position haute.

Avantageusement, l'élément de rappel élastique 125 permet de simplifier le fonctionnement du dispositif d'entrainement 124. Par exemple, le dispositif d'entrainement 124 peut être un moteur pas à pas ou un servo-moteur. Dans ce cas, le déplacement de la tête de distribution de la position basse à la position haute se fait avec le moteur en roue libre.

En variante, le dispositif d'entraînement 124 peut comprendre un servomoteur travaillant dans les deux sens, un actionneur linéaire comme un moteur linéaire, ou un vérin capable de donner un mouvement de va-et-vient à la tête de distribution. Dans ce cas, le dispositif d'injection 12 ne comprend pas d'élément de rappel élastique 125.

Comme détaillé dans la figure 1, le dispositif d'injection 12 peut comprendre un dispositif d'alimentation 123 configuré pour amener la fibre à la tête de distribution. Dans cet exemple, le dispositif d'alimentation 123 est une bobine, ce qui permet de stocker une fibre très longue et continue.

Avantageusement, la tête de distribution 121 peut être configurée pour délivrer un matériau d'interphase 128 avec la fibre 122.

Par exemple, le dispositif d'injection 12 peut comprendre un deuxième dispositif d'alimentation destiné à contenir le matériau d'interphase 128. Le matériau d'interphase 128 peut ainsi être acheminé du deuxième dispositif d'alimentation vers la tête de distribution 121 grâce à une pompe (par exemple une pompe péristaltique) à débit contrôlable et un tuyau 126. L'utilisation d'une pompe à débit contrôlable est avantageuse car elle permet de pomper un matériau d'interphase 128 caractérisé par une haute performance mécanique. La haute performance mécanique permet d'augmenter l'adhérence entre le matériau d'interphase 128 et la matrice imprimée permettant ainsi d'augmenter le transfert de charge entre les deux matériaux. De plus, contrôler la quantité de matériau d'interphase 128 injecté dans la matrice imprimée permet d'augmenter significativement l'adhérence entre les couches de la matrice imprimée et ainsi diminuer les zones de faiblesses mécaniques entre ces couches. Finalement, le contrôle du débit par la pompe permet de compenser l'endommagement de la matrice induit par l'oscillation du dispositif d'injection 12 au cœur de la matrice par une injection de matériau aux performances mécaniques supérieures.

Dans ce cas, un actionneur peut actionner la pompe lorsque la tête de distribution 121 se trouve dans sa position basse, et arrêter la pompe lorsque la tête de distribution 121 se trouve dans sa position haute. Cette configuration permet de délivrer le matériau d'interphase 128 lorsque la tête de distribution 121 est au sein de la matrice imprimée. L' actionneur peut actionner la pompe dès que la tête de distribution 121 atteint la matrice imprimée lors de son déplacement de sa position haute vers sa position basse, ce qui permet d'obtenir un volume suffisant de matériau d'interphase 128 même en cas de faible débit.

La tête de distribution 121 peut comporter un orifice d'entrée, un orifice de sortie et une cavité dans laquelle débouchent lesdits orifices. Dans ce cas, le matériau d'interphase 128 peut être introduit dans la cavité de la tête de distribution 121 grâce à un tuyau 126. Cette configuration permet de délivrer un matériau d'interphase 128 fluide. Le matériau d'interphase 128 traverse ainsi la cavité de la tête de distribution 121 jusqu'à l'orifice de sortie. A proximité de la sortie, la fibre 122 entre en contact avec le matériau d'interphase 128, qui l'enveloppe (par exemple si le matériau d'interphase 128 est très visqueux) et/ou l'imprègne au moins partiellement (matériau d'interphase 128 liquide).

Dans un mode de réalisation alternatif (non illustré), la fibre 122 est aussi introduite dans un orifice de la tête de distribution. Par exemple, elle peut être introduite dans le même orifice qui reçoit le matériau d'interphase 128, ou dans un orifice distinct.

Avantageusement, le matériau d'interphase 128 forme une interface entre la fibre 122 et la matrice imprimée qui permet d'améliorer l'adhérence fibre/matrice.

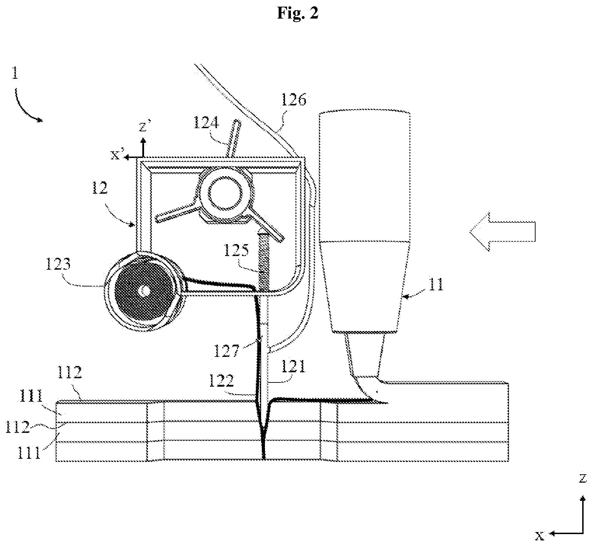

La figure 2 montre une vue frontale du système de la figure 1, dans laquelle une partie de la matrice imprimée est cachée, pour une meilleure compréhension du déplacement de la tête de distribution 121, et de l'introduction de la fibre 122 au sein de la matrice imprimée.

La trajectoire de la tête de distribution 121 est le résultat de deux mouvements : l'oscillation de la tête de distribution 121 le long de la direction verticale z (entre la position haute et la position basse), et son déplacement sur le plan de dépôt xy.

Quand la tête de distribution 121 se trouve dans sa position haute, elle ne rentre pas en contact avec la matrice imprimée.

Quand la tête de distribution 121 se trouve dans sa position basse, elle se trouve au sein de la matrice imprimée (figure 2).

La fibre 122 est délivrée via la tête de distribution 121 mobile, elle forme donc un motif continu dans la matrice imprimée qui suit la trajectoire de la tête de distribution 121. Ce motif continu assure la continuité multidirectionnelle du renfort au sein de la matrice imprimée.

En outre, durant son oscillation le long de la direction verticale z, la tête de distribution 121 traverse, en faisant plusieurs allers-retours, au moins un inter-couche 112, c'est-à-dire au moins deux couches 111.

En conséquence, le motif continu formé par la fibre 122 relie les couches 111 entre elles, permettant ainsi d'améliorer l'adhérence entre couches 111 successives.

Il est à noter que les solutions existantes pour renforcer les matériaux de construction imprimés ne permettent pas d'obtenir des résultats satisfaisants car elles n'agissent en aucun cas sur l'adhérence entre les couches 111.

Une mauvaise adhérence entre les couches 111 déposées génère une hétérogénéité des performances mécaniques du matériau imprimé selon la direction z perpendiculaire au plan de dépôt xy.

En outre, une mauvaise adhérence entre les couches 111 tend à diminuer les performances du matériau en flexion.

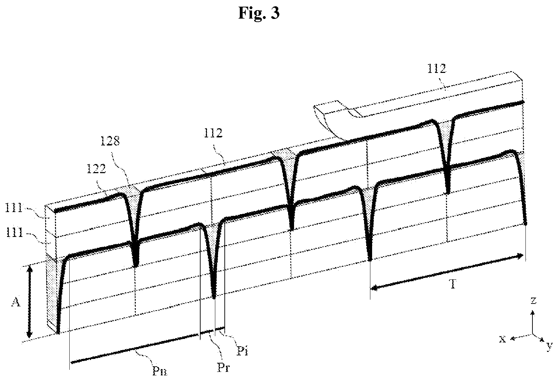

La figure 3 illustre un exemple de motif continu formé par la fibre 122 au sein de la matrice imprimée. Dans cet exemple, la fibre 122 traverse trois couches 111 de cette matrice.

Le motif continu de la fibre 122 est caractérisé par une amplitude A et une périodicité T.

Avantageusement, il est possible de varier l'amplitude A et la périodicité T du motif, en variant l'amplitude et la fréquence de l'oscillation imposée par le dispositif d'entrainement 124, respectivement.

En variant l'amplitude A du motif, il est possible de modifier le nombre de couches 111 traversées par la fibre 122.

De préférence, l'amplitude A du motif est comprise entre 5 cm et 50 cm.

En variant la fréquence de l'oscillation, il est possible de modifier la périodicité T du motif. Par exemple, le dispositif d'entrainement 124 peut comporter un moteur et un contrôleur configuré pour contrôler la vitesse de rotation du moteur. En variante, le dispositif d'entraînement 124 peut comprendre un actionneur linéaire comme un moteur linéaire, ou un vérin capable de donner un mouvement de va-et-vient à la tête de distribution.

De préférence, la périodicité T du motif est comprise entre 5 cm et 20 cm.

Le système 1 selon l'invention est particulièrement adapté à la fabrication d'un matériau de construction. En effet, ces matériaux présentent généralement l'inconvénient d'une faible résistance à la traction.

La matrice imprimée peut être tout matériau de construction (isolant ou structurel) imprimable. Elle peut être un matériau composite, ou un matériau homogène.

Par exemple, la matrice imprimée peut être une matrice à base de polymères.

En variante, la matrice imprimée peut être une matrice cimentaire, comme par exemple du mortier, du béton, de la mousse de béton.

Avantageusement, le ciment contenu dans ces matrices cimentaires imprimables peut être remplacé totalement ou en partie un matériau à base de terre (argile, sédiments), des déchets issus des domaines du recyclage (et co-produits de l'industrie) ou des déchets de construction. La fabrication du ciment étant une importante source d'émissions de CO₂, son remplacement avec ces liants alternatifs permet d'obtenir un procédé de fabrication moins polluant, et de valoriser des déchets industriels.

La fibre 122 peut être une fibre synthétique, par exemple à base de métaux (de préférence acier), de nylon, de carbone, de verre, d'aramides, de polyéthylène (de préférence polyéthylène de masse molaire très élevée).

Ces fibres 122 ont de bonnes propriétés mécaniques, et sont flexibles.

Alternativement, la fibre 122 peut être une fibre végétale, à base de chanvre, de lin, de coton, d'algues.

De préférence, la fibre 122 est sous forme d'une tresse, d'un fil, ou d'un toron.

Avantageusement, une fibre 122 sous forme d'une tresse, ou d'un toron est poreuse, ce qui permet de favoriser l'adhérence entre la fibre 122 et la matrice imprimée et/ou le matériau d'interphase 128. En outre, le tressage ou toronnage de la fibre 122 permet d'améliorer sa résistance mécanique.

Le matériau d'interphase 128 peut être un coulis de ciment, une matrice à base de terre (par exemple des sédiments et/ou argile), une matrice polymère. Ces matériaux sont caractérisés par une haute performance mécanique et une haute adhérence à la fibre 122 et à la matrice imprimée.

L'invention concerne également un procédé de fabrication d'un matériau de construction composite comprenant une matrice imprimée et une fibre 122 continue noyée dans cette matrice imprimée.

Plus précisément, le procédé comprend une étape de dépôt d'au moins deux couches 111 de matrice imprimée sur un plan de dépôt xy, et une étape d'insertion de la fibre 122 continue à l'intérieur des au moins deux couches 111.

De manière avantageuse, le procédé peut comprendre également l'introduction d'un matériau d'interphase 128. Dans ce cas, le matériau d'interphase 128 est introduit avec la fibre 122 continue au travers des au moins deux couches 111, durant l'étape d'insertion.

D'après l'invention, le procédé utilise un système 1 comprenant une tête d'impression 11 et un dispositif d'injection 12 comme décrit ci-avant. Dans ce cas, le mode de fonctionnement du système 1 selon le mode préféré est le suivant.

Durant une étape de dépôt, au moins deux couches 111 de matrice sont imprimées par la tête d'impression 11 sur le plan de dépôt xy.

Cette étape de dépôt comprend une phase d'injection (Pi), une phase de retour (Pr), et une phase neutre (Pn).

Durant la phase d'injection Pi la tête de distribution 121 est déplacée le long de la position verticale z de sa position haute à sa position basse (figure 2). Ce déplacement est assuré par le dispositif d'entrainement 124.

Cette phase d'injection Pi permet d'introduire la fibre 122 au sein de la matrice imprimée.

Durant la phase de retour Pr la tête de distribution 121 est déplacée le long de la position verticale z de sa position basse à sa position haute. D'après l'invention, ce déplacement Pr est assuré par un élément de rappel élastique.

Durant la phase neutre Pn la tête de distribution 121 est en position haute. Durant cette phase Pn il n'y a pas de mouvement relatif entre la tête de distribution 121 et le dispositif d'injection 12. Par conséquent, cette phase neutre Pn correspond à une ligne horizontale dans le motif défini par la fibre 122 (figure 3).

Il est à noter que dans l'exemple détaillé sur la figure 3, un matériau d'interphase 128 est délivré durant la phase d'injection Pi et la phase de retour Pr. Toutefois, le matériau d'interphase 128 peut être délivré également durant la phase neutre Pn, permettant alors de résoudre avantageusement les éventuelles problématiques de séchage.

Plus précisément, dans cet exemple, la tête d'impression 11 a imprimé cinq couches 111 de matrice en cinq étapes de dépôt successives, et une sixième étape de dépôt est en cours. La tête de distribution 121 a délivré la fibre 122 durant la quatrième étape de dépôt (c'est-à-dire après dépôt de la troisième couche 111 de matrice imprimée et durant le dépôt de la quatrième couche 111) et durant la sixième étape de dépôt (après dépôt de la cinquième couche 111 et durant le dépôt de la sixième couche 111).

Pour faciliter l'intelligibilité de la figure, les phases d'injection Pi, de retour Pr et neutre Pn sont indiquées relativement à la quatrième étape de dépôt.

### BRÈVE DESCRIPTION DES FIGURES

**Figure 1** est une vue en perspective d'un système 1 selon un mode de réalisation de l'invention.
**Figure 2** est une vue frontale montrant le système 1 de la figure 1.
**Figure 3** est un une vue en perspective montrant un exemple de motif défini par la fibre au sein de la matrice imprimée.

Dans le but d'illustrer, le système 1 est représenté dans des modes de réalisation préférés. Il doit être compris, cependant, que la présente demande n'est pas limitée aux arrangements, structures, caractéristiques, modes de réalisation et apparences précis indiqués. Les dessins ne sont pas dessinés à l'échelle et ne sont pas destinés à limiter la portée des revendications aux modes de réalisation représentés dans ces derniers.

## Revendications

1. Système (1) de fabrication d'un matériau de construction composite comprenant une matrice imprimée et une fibre (122) continue noyée dans ladite matrice, le système (1) comprenant une tête d'impression (11) configurée pour déposer la matrice par dépôt de matière en couches (111) successives sur un plan de dépôt, et un dispositif d'injection (12) configuré pour introduire la fibre (122) continue dans la matrice déposée par la tête d'impression (11), le dispositif d'injection (12) comprenant :
• une tête de distribution (121) configurée pour délivrer la fibre (122), ladite tête de distribution étant mobile selon une direction verticale (z) perpendiculaire au plan de dépôt, entre une position haute et une position basse;
• un dispositif d'entrainement (124) configuré pour faire osciller la tête de distribution entre la position haute et la position basse ; et **caractérisé en ce que** le dispositif d'injection (12) comprend en outre:
• un élément de rappel élastique (125) configuré pour rappeler passivement la tête de distribution (121) de la position basse à la position haute.

2. Système (1) selon la revendication 1, dans lequel la tête de distribution (121) comprend une aiguille creuse apte à être traversée par la fibre (122) continue.

3. Système (1) selon l'une quelconque des revendications **1** à **2,** dans lequel la tête de distribution est configurée pour délivrer un matériau d'interphase (128) avec la fibre (122).

4. Système (1) selon la revendication **3,** comprenant une pompe à débit contrôlable pour délivrer le matériau d'interphase (128) à la tête de distribution (121).

5. Système (1) selon l'une quelconque des revendications **1** à **4,** dans lequel le dispositif d'entrainement (124) est configuré pour faire osciller la tête de distribution (121) entre la position haute et la position basse à une fréquence et une amplitude prédéterminées.

6. Procédé de fabrication d'un matériau de construction composite comprenant une matrice imprimée et une fibre (122) continue noyée dans ladite matrice, le procédé comprenant une étape de dépôt d'au moins deux couches (111) de matrice imprimée, et une étape d'insertion de la fibre (122) continue à l'intérieur des au moins deux couches (111), **caractérisé en ce que** lesdites étapes sont effectuées à l'aide du système (1) de fabrication d'un matériau de construction composite selon l'une des revendications **1** à **5.**

7. Procédé selon la revendication **6,** comprenant en outre pendant l'étape d'insertion, l'introduction d'un matériau d'interphase (128) avec la fibre (122) continue au travers des au moins deux couches (111).

8. Procédé (1) selon la revendication **6** ou la revendication **7,** dans lequel la matrice imprimée comprend du béton, de la mousse de béton, de la mousse isolante, un matériau argileux.

9. Procédé (1) selon l'une quelconque des revendications **6** à **8,** dans lequel la fibre (122) est une fibre en acier, une fibre de carbone, une fibre végétale, ou une fibre synthétique, de préférence sous forme d'une tresse, d'un fil, ou d'un toron.

## Patentansprüche

1. System (1) zur Herstellung eines Verbundbaustoffs, das eine gedruckte Matrix und eine in die Matrix eingebettete Endlosfaser (122) umfasst, wobei das System (1) einen Druckkopf (11) umfasst, der so eingerichtet ist, dass er die Matrix durch Abscheidung von Material in aufeinanderfolgenden Schichten (111) auf einer Abscheidungsebene abscheidet, und eine Einspritzvorrichtung (12), die so eingerichtet ist, dass sie die Endlosfaser (122) in die von dem Druckkopf (11) abgeschiedene Matrix einbringt, wobei die Einspritzvorrichtung (12) Folgendes umfasst:
• einen Verteilerkopf (121), der so eingerichtet ist, dass er die Endlosfaser (122) abgibt, wobei der Verteilerkopf in einer vertikalen Richtung (z) senkrecht zur Abscheidungsebene zwischen einer oberen und einer unteren Position beweglich ist;
• eine Antriebsvorrichtung (124), die so eingerichtet ist, dass sie den Verteilerkopf zwischen der oberen und der unteren Position schwingt; und **dadurch gekennzeichnet, dass** die Einspritzvorrichtung (12) ferner Folgendes umfasst:
• ein elastisches Rückstellelement (125), das so eingerichtet ist, dass es den Verteilerkopf (121) passiv von der unteren Postion in die obere Position zurückstellt.

2. System (1) nach Anspruch 1, wobei der Verteilerkopf (121) eine Hohlnadel umfasst, die durch die Endlosfaser (122) hindurchgeführt werden kann.

3. System (1) nach einem der Ansprüche 1 bis 2, wobei der Verteilerkopf so eingerichtet ist, dass er ein Zwischenphasenmaterial (128) mit der Endlosfaser (122) abgibt.

4. System (1) nach Anspruch 3, das eine steuerbare Durchflusspumpe umfasst, um das Zwischenphasenmaterial (128) zum Verteilerkopf (121) abzugeben.

5. System (1) nach einem der Ansprüche **1** bis **4,** wobei die Antriebsvorrichtung (124) so eingerichtet ist, dass sie den Verteilerkopf (121) zwischen der oberen und der unteren Position mit einer vorbestimmten Frequenz und Amplitude schwingt.

6. Verfahren zur Herstellung eines Verbundbaustoffs, der eine gedruckte Matrix und eine in die Matrix eingebettete Endlosfaser (122) umfasst, wobei das Verfahren einen Schritt des Abscheidens von mindestens zwei Schichten (111) der gedruckten Matrix und einen Schritt des Einführens der Endlosfaser (122) in die mindestens zwei Schichten (111) umfasst, **dadurch gekennzeichnet, dass** die Schritte mithilfe des Systems (1) zur Herstellung eines Verbundbaustoffs nach einem der Ansprüche **1** bis **5** durchgeführt werden.

7. Verfahren nach Anspruch **6,** das ferner während des Einführschritts das Einbringen eines Zwischenphasenmaterials (128) mit der Endlosfaser (122) durch die mindestens zwei Schichten (111) hindurch umfasst.

8. Verfahren (1) nach Anspruch **6** oder Anspruch **7,** wobei die gedruckte Matrix Beton, Betonschaum, Isolierschaum und ein Tonmaterial umfasst.

9. Verfahren (1) nach einem der Ansprüche **6** bis **8,** wobei die Endlosfaser (122) eine Stahlfaser, eine Kohlefaser, eine Pflanzenfaser oder eine synthetische Faser ist, vorzugsweise in Form eines Geflechts, eines Drahts oder einer Litze.

## Claims

1. A system (1) for manufacturing a composite construction material comprising a printed matrix and a continuous fiber (122) embedded in said matrix, the system (1) comprising a print head (11) configured to deposit the matrix by successive layer-by-layer (111) material deposition on a deposition plane, and an injection device (12) configured to introduce the continuous fiber (122) into the matrix deposited by the print head (11), the injection device (12) comprising:
- a distribution head (121) configured to deliver the fiber (122), said distribution head being movable along a vertical direction (z) perpendicular to the deposition plane, between a high position and a low position;
- a drive device (124) configured to oscillate the distribution head between the high position and the low position; and
- an elastic return element (125) configured to passively return the distribution head (121) from the low position to the high position.

2. The system (1) according to claim 1, wherein the distribution head (121) comprises a hollow needle suitable for being traversed by the continuous fiber (122).

3. The system (1) according to any one of claims 1 to 2, wherein the distribution head is configured to deliver an interphase material (128) with the fiber (122).

4. The system (1) according to claim 3, comprising a controllable flow rate pump for delivering the interphase material (128) to the distribution head (121).

5. The system (1) according to any one of claims 1 to 4, wherein the drive device (124) is configured to oscillate the distribution head (121) between the high position and the low position at a predetermined frequency and amplitude.

6. A method for manufacturing a composite construction material comprising a printed matrix and a continuous fiber (122) embedded in said matrix, the method comprising a step of depositing at least two layers (111) of printed matrix, and a step of inserting the continuous fiber (122) within the at least two layers (111), said steps being performed using the system (1) for manufacturing a composite construction material according to any one of claims 1 to 5.

7. The method according to claim 6, further comprising, during the insertion step, the introduction of an interphase material (128) with the continuous fiber (122) through the at least two layers (111).

8. The method (1) according to claim 6 or claim 7, wherein the printed matrix comprises concrete, foamed concrete, insulating foam, or a clay-based material.

9. The method (1) according to any one of claims 6 to 8, wherein the fiber (122) is **a** steel fiber, a carbon fiber, a plant-based fiber, or a synthetic fiber, preferably in the form of a braid, a wire, or a strand.
